# EUROPEAN PATENT SPECIFICATION

(11) **EP 1 936 943 B1**
(45) Date of publication and mention of the grant of the patent: **19.09.2018**
(21) Application number: 07123503.0
(22) Date of filing: 18.12.2007
(51) Int. Cl.: H04N 1/00

(54) **Image forming apparatus and control method thereof**
Bilderzeugungsvorrichtung und Steuerverfahren dafür
Appareil de formation d'images et son procédé de commande

(30) Priority: 20.12.2006 KR 20060130916; 07.11.2007 KR 20070113182
(43) Date of publication of application: 25.06.2008
(60) Divisional application: 12173680.5
(73) Proprietor: HP Printing Korea Co., Ltd., Gyeonggi-do 16677 (KR)
(72) Inventor: Park, Kyoung-sik, Seoul (KR); Park, Young-jin, Bucheon-si (KR)
(74) Representative: Appleyard Lees IP LLP

(56) References cited:
- EP-A2- 1 286 256
- US-A- 4 916 547
- US-A- 5 499 092
- US-A- 5 541 708
- US-A- 6 167 217
- US-A1- 2001 004 425
- US-A1- 2003 142 988
- US-B1- 6 300 968

## Description

### Field of the Invention

The present general inventive concept relates to an image forming apparatus and a control method thereof, and more particularly, to an image forming apparatus which performs an improved color registration process using a test image and a control method thereof.

### Description of the Related Art

An image forming apparatus such as a laser printer exposes a photosensitive member, develops a toner, and transfers and fuses the toner to a printing medium such as a paper, thereby forming an image.

Generally, an image forming apparatus to form a color image includes an image forming part which has a laser scanning unit (LSU) provided corresponding to a plurality of colors, and a plurality of photosensitive members and transfer rollers, etc. The plurality of photosensitive members are arranged along a transport path of a printing medium transported by a transporting means such as a transporting belt.

The image forming apparatus forms an image for color registration (hereinafter, referred to as a test image) other than an actual image in order to adjust an image forming characteristic (hereinafter, referred to as color registration) of the image forming part, e.g., determination of a developing condition, color registration, etc.

Conventionally, the color registration is performed in an initializing process when the image forming apparatus is provided with power or after the predetermined number of papers is printed.

In the color registration, an image of data is not printed (hereinafter, referred to as printing data). Rather, a test image is formed. The test image is not formed during a printing process for the printing data, but is formed during the aforementioned initializing process before start of the printing process or after completion of a predetermined number of the printing process.

Thus, a lengthy period of time transpires from when the image forming apparatus is supplied with power until a first printing output is obtained (hereinafter, referred to as a first page output time). In other words, the time to obtain a printing output is delayed.

Further, if the color registration is performed separately from the printing process, a color discordance occurring in the actual printing process may not be properly reflected on the color registration.

US 6,300,968 discloses a colour registration system for the registration of plural colour images on an image bearing surface, such as a photoreceptor belt of a colour printer. This document acknowledges known image registration systems in which registration positional marks are placed in the inter-image zone between the images for two consecutive prints.

US 2003/0142988 discloses a test pattern forming unit for forming a test pattern and a control unit for detecting the test pattern and executing image control.

### SUMMARY OF THE INVENTION

The present invention provides an image forming apparatus which has an improved printing speed by minimizing delay due to color registration and a control method thereof.

Another aspect of the present invention is to provide an image forming apparatus which improves accuracy and reliability of color registration by reflecting a color discordance which may be generated in a printing process and a control method thereof.

Additional aspects and utilities of the present general inventive concept will be set forth in part in the description which follows and, in part, will be obvious from the description, or may be learned by practice of the present general inventive concept.

According to the present invention there is provided an apparatus and method as set forth in the appended claims. Other features of the invention will be apparent from the dependent claims, and the description which follows.

### BRIEF DESCRIPTION OF THE DRAWINGS

These and/or other aspects and utilities of the present general inventive concept will become apparent and more readily appreciated from the following description of the exemplary embodiments, taken in conjunction with the accompanying drawings, in which:
FIG. 1 is a block diagram to illustrate a configuration of an image forming apparatus according to an exemplary embodiment of the present general inventive concept;
FIG. 2 is a cross-sectional view of a transport part according to an exemplary embodiment of the present general inventive concept;
FIG. 3 is a block diagram illustrating a configuration of an image forming part according to an exemplary embodiment of the present general inventive concept;
FIG. 4 illustrates a margin between two consecutive printing mediums in a printing process;
FIG. 5 is a timing diagram illustrating a control sequence of a controller according to an exemplary embodiment of the present general inventive concept;
FIG. 6 illustrates a memory map of printing data and test data stored in a data storage part according to an exemplary embodiment of the present general inventive concept; and
FIG. 7 is a flowchart illustrating an operation of the image forming apparatus according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein reference numerals refer to their associated respective elements throughout. The exemplary embodiments are described below in order to explain the present general inventive concept by referring to the figures.

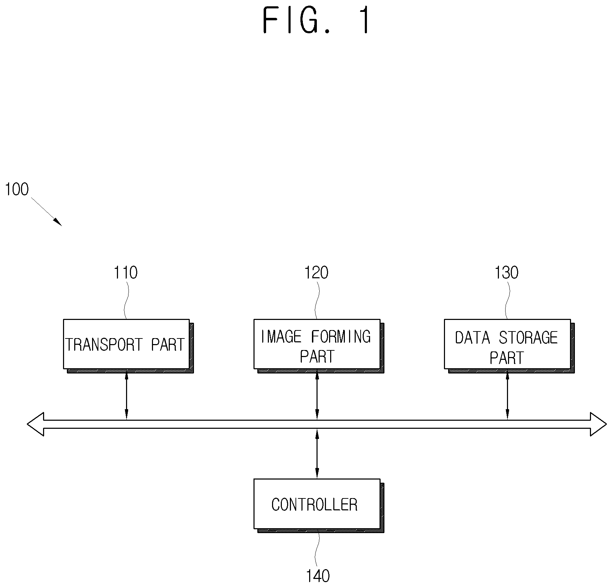

FIG. 1 is a block diagram illustrating a configuration of an image forming apparatus 100 according to an exemplary embodiment of the present general inventive concept. The image forming apparatus 100 may be provided as a laser printer.

Referring to FIG. 1, the image forming apparatus 100 may include a transport part 110, an image forming part 120, a data storage part 130, and a controller 140.

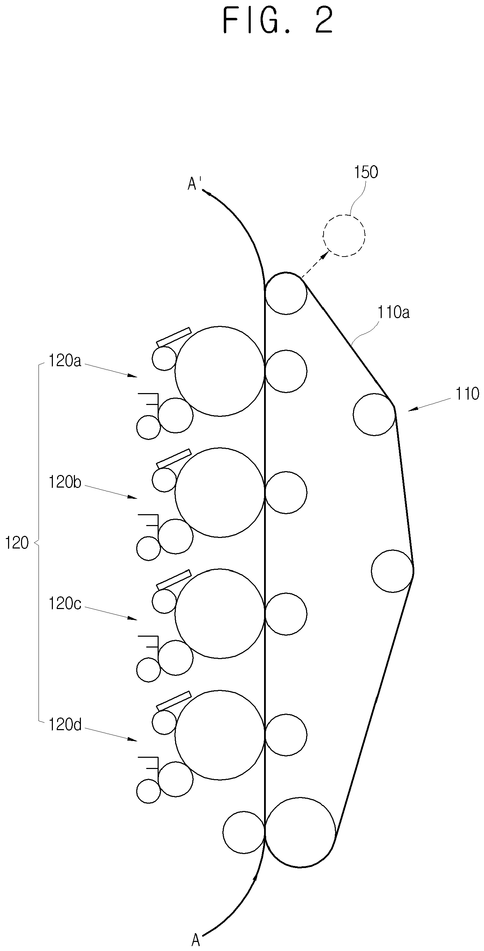

The transport part 110 transports a printing medium, e.g., a paper, in accordance with control signals from the controller 140. FIG. 2 is a cross-sectional view of the transport part 110 according to the exemplary embodiment of FIG. 1. The transport part 110 may include a transport belt 110a, and transports a printing medium (not illustrated) by moving the transport belt 110a. Referring to FIG. 2, the transport belt 110a transports the printing medium in a direction from A to A', which is referred to as a printing medium transport path. Thus, the transport belt 110a movement corresponds to the printing medium transport path.

The image forming part 120 can form an image by transferring a toner to the printing medium according to printing data. Referring to FIG. 2, the image forming part 120 may include four sub-image forming parts 120a, 120b, 120c, and 120d to correspond to respective colors such as cyan, magenta, yellow and black, respectively. The sub-image forming parts 120a, 120b, 120c and 120d each can perform exposure, development and transfer according to the printing data.

The image forming part 120 can form a test image for a color registration in accordance with control signals from the controller 140. The test image is formed on a surface portion (not illustrated) of the transport belt 110a based on test data. The test image may be formed to correspond to each of the sub-image forming parts 120a, 120b, 120c and 120d. For example, the test image may be formed as a sign or a letter.

Referring to FIG. 2, the image forming apparatus 100 may further include a sensor 150 which is provided on a path where the transport belt 110a moves and senses light reflected to the test image. A result sensed by the sensor 150 is delivered to the controller 140, and can be used for the color registration.

The image forming apparatus 100 may further include a data storage part 130 which stores printing data to be printed and test data to correspond to a test image. The image forming part 120 reads the printing data and the test data in the data storage part 130 and performs a printing process and a color registration based on the printing data and the test data.

The controller 140 controls the overall image forming apparatus 100. The controller 140 controls the image forming part 120 to form an image on a printing medium on the basis of the printing data. In addition, the controller 140 controls the image forming part 120 to form a test image on the transport belt 110a on the basis of the test data. In detail, the controller 140 controls the image forming part 120 to form the test image while forming the image on a plurality of printing media in one printing process.

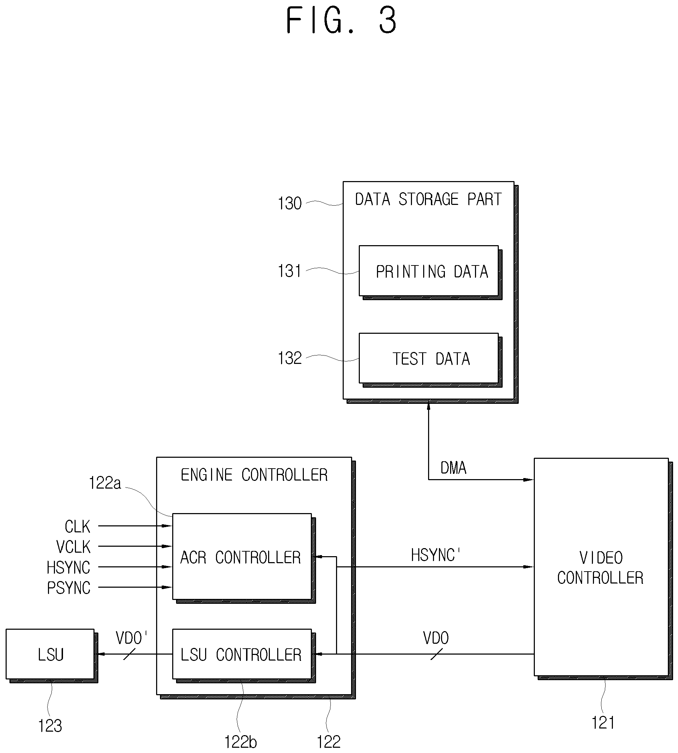

FIG. 3 is a block diagram illustrating a configuration of the image forming part 120 according to the present exemplary embodiment. The image forming part 120 may further include a video controller 121, an engine controller 122 and a laser scanning unit (LSU) 123. The video controller 121 and the engine controller 122 may be provided as a chip on a printed circuit board (PCB) (not illustrated).

The data storage part 130 stores printing data 131 to be printed and test data 132 corresponding to a test image for a color registration. The data storage part 130 may be provided as a synchronous dynamic random access memory (SDRAM), a read only memory (ROM), and other well known memory devices.

The video controller 121 receives the printing data 131 or the test data 132 through direct memory access (DMA) to generate video data (VDO).

The engine controller 122 may include an auto color registration (ACR) controller 122a and an LSU controller 122b. The test image obtained by the sensor 150 from the controller 140 is transmitted to the ACR controller 122a, whereby it performs the color registration. The color registration is applied to a printing process immediately following the sensing of the test image.

The LSU controller 122b converts video data (VDO) generated by the video controller 121 into output video data (VDO') to the LSU 123 in order to drive the LSU 123.

The Laser Scanning Unit (LSU) 123 scans the laser at a plurality of photosensitive members (not illustrated) provided in the sub-image forming parts 120a, 120b, 120c and 120d according to the output video data (VDO') to form a latent image, thereby performing an exposure. A combination of the sub-image forming parts 120a, 120b, 120c and 120d and the LSU 123 is provided as an example of an engine in the present exemplary embodiment.

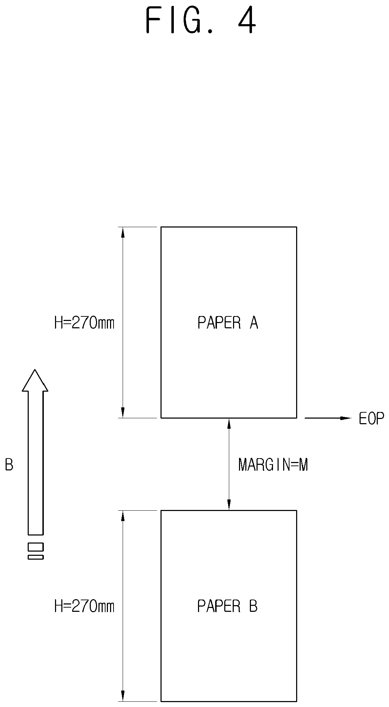

FIG. 4 illustrates a margin between two consecutive printing media (hereinafter, referred to as a paper) in one printing process. The transport belt 110a transports a paper A and a paper B in a direction of B in the printing process. If a printing speed is 60 pages per minute (ppm), a margin between the papers A and B may be set at about 30% of the height H of the paper. For example, the height H of the papers A and B is about 270mm (A4), and the margin M between the papers is about 80mm.

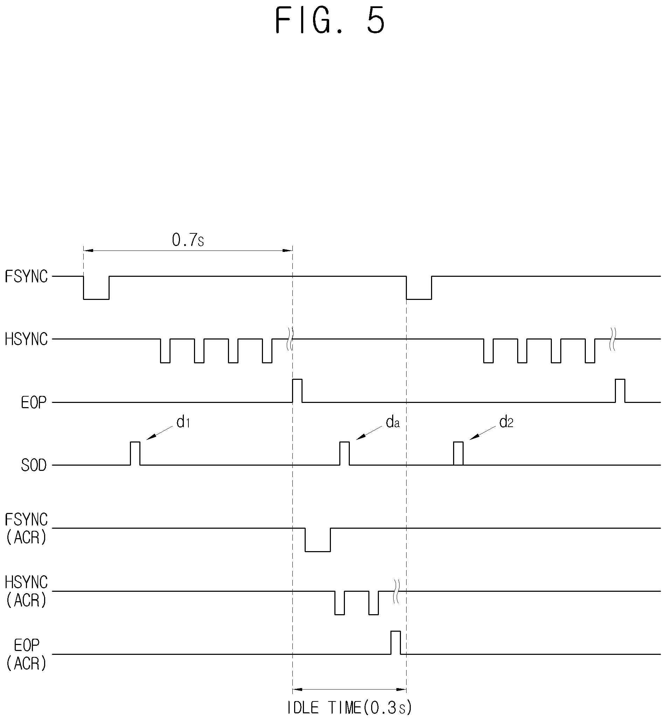

FIG. 5 is a timing diagram illustrating a control sequence of the controller 140 according to an exemplary embodiment of the present general inventive concept. The controller 140 can generate a control signal which is output to the image forming part 120 so that the image forming part 120 can perform a printing process or form a test image.

Referring to FIG. 5, a control signal may include an FSYNC signal, an HSYNC signal, an SOD (Start Of Direct (Memory Access)) signal, an EOP (End Of Page) signal, an FSYNC (ACR) signal, an HSYNC (ACR) signal, an SOD (ACR) signal and an EOP (ACR) signal. In this case, the FSYNC signal, HSYNC signal, SOD signal, and EOP signal correspond to a printing process. Referring to FIG. 3, the control signal can be input to the video controller 121 via the engine controller 122.

The FSYNC signal indicates a start of a printing process, and the HSYNC indicates a horizontal synchronous signal. For example, if a printing speed is 60ppm and A4 paper is provided, an interval between FSYNC signals is 1 second. After the FSYNC, printing is performed in a unit of the line according to the HSYNC.

The SOD signal indicates a start of direct memory access (DMA) to printing data. The video controller 121 starts DMA to the data storage part 130 by an SOD after the FSYNC and reads out printing data 131 stored in the data storage part 130.

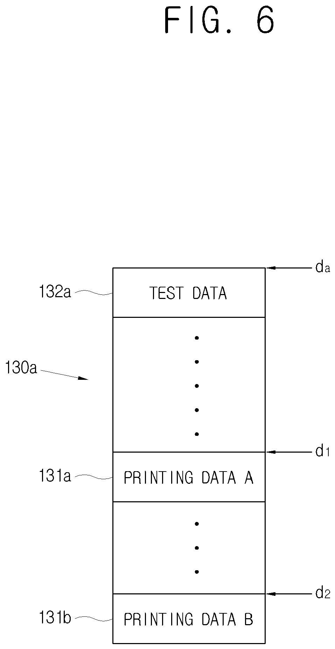

FIG. 6 illustrates a memory map 130a of printing data and test data stored in a data storage part 130 according to an exemplary embodiment of the present general inventive concept. If an SOD d₁ which indicates a start of DMA to printing data corresponding to the paper A is present after the FSYNC, the video controller 121 reads out printing data A 131a stored in the data storage part 130. Likewise, an SOD d₂ indicates start of DMA to printing data B 131b corresponding to the paper B.

After 0.7 seconds from the FSYNC, the printing on the paper A is completed by the EOP to indicate completion of printing. There is an interval of about 0.3 seconds from the EOP for the paper A to the FSYNC for the paper B, which is referred to as an idle time when printing is not practically performed.

In the present exemplary embodiment, the controller 140 outputs a control signal to the image forming part 120 to form a test image for color registration on the transport belt 110a within the idle time. Regarding the control signal, the FSYNC (ACR), HSYNC (ACR), SOD (ACR) and EOP (ACR) correspond to forming the test image.

The FSYNC (ACR) indicates the start of forming a test image and is generated right after the EOP for the paper A. During the idle time, a polygon mirror (illustrated) provided in the LSU 123 keeps its rotation state, and the HSYNC (ACR) is continually sensed. Thus, the video controller 121 reads out test data stored in the data storage part 130 through DMA in the idle time as well as during the printing process.

In detail, after the FSYNC, if an SOD dₐ which indicates start of DMA to test data is present, the video controller 121 reads out the test data 132a stored in the data storage part 130.

Then, the image forming part 120 completes forming a test image by an EOP (ACR) and starts printing paper B by a new FSYNC.

Provided that a period of an HSYNC is 450psec, a test image with 600 or more lines may be formed in the idle time of 0.3 seconds.

As described above, since the color registration is performed during the printing process, a first page output time (FPOT) is minimized, thereby improving printing speed. Also, as compared with the color registration which is performed periodically according to the accumulated number of printing papers, a delay time between processes is minimized.

Further, since the color registration can be performed under the same conditions as the printing process, a discordance which may be generated in the printing process is maximally reflected upon the color registration, thereby improving accuracy and reliability of the color registration.

Referring to FIG. 3, as the HSYNC is transmitted to the video controller 121 via the engine controller 122, timing delays may arise (refer to HSYNC' in FIG. 3), e.g., a gate delay in the engine controller 122 or a wire delay in the printed circuit board (PCB).

In a present exemplary embodiment, a timing delay element which is generated in video data VDO and VDO' is reflected on the color registration under the same conditions as the printing process. Thus, a comparatively accurate color registration as compared with the color registration can be performed independently from the printing process by the engine controller 122.

Also, since the video controller processes the test data to form the test image as well as the printing data, the ACR controller has a simple configuration and a reduced cost in comparison to an ACR controller having a separate configuration for processing test data.

Meanwhile, the test data, e.g., synchronous dynamic random access memory (SDRAM), can be stored in the data storage part and may be direct-memory accessed (DMA) by the video controller. Thus, various types of test images may be formed as compared with test data residing in the engine controller 122.

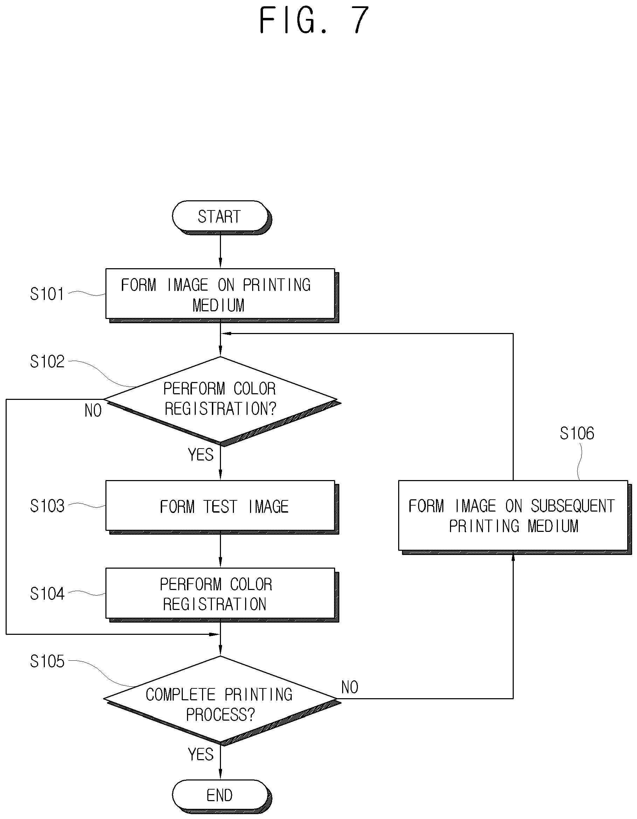

FIG. 7 is a flowchart illustrating an operation of the image forming apparatus 100 according to an exemplary embodiment of the present general inventive concept. First, the controller 140 controls image forming part 120 to form an image on a first printing medium in a printing process which involves a plurality of printing media (operation S101). At operation S101, the controller 140 controls the video controller 121 to generate video data on the basis of printing data corresponding to the first printing medium.

The controller 140 determines whether to perform color registration of the image forming part 120 (operation S102). If it performs the color registration at operation S102, the controller 140 controls the image forming part 120 to form a test image on the transport belt 110a (operation S103).

In FIG. 7, at operation S103, the controller 140 may output a control signal to the image forming part 120 to form the test image within the idle time of the printing process. Further, the controller 140 may control the video controller 121 to generate video data on the basis of test data for the color registration.

The controller 140 controls the ACR controller 122a so that the image forming part 120 can perform the color registration according to a test image (operation S104) sensing result.

If operation S104 is performed or it is determined to not perform the color registration at operation S102, the controller 140 checks if the printing process for all printing media is completed (operation S105).

If the printing process for all the printing media is not completed, the controller 140 controls the image forming part 120 to form an image on a subsequent printing medium among the plurality of printing media (operation S106). Then, operations S102 through S106 are repeated.

According to the present general inventive concept, since the color registration is performed during the printing process, a first page output time (FPOT) is minimized to thereby improve a printing speed. Also, as compared with the color registration which is performed periodically according to the accumulation number of printing papers, delay time between processes is minimized.

Further, since the color registration is performed under the same condition as the printing process, a discordance which may be generated in the printing process is maximally reflected on the color registration, thereby improving accuracy and reliability of the color registration. A timing delay element which is generated in a video data is reflected upon the color registration under the same condition as the printing process, thereby performing comparatively accurate color registration.

Also, since the video controller processes the test data to form the test image as well as the printing data, the ACR controller has a simple configuration and reduced configuration costs.

Meanwhile, the test data can be stored in the data storage part, e.g., synchronous dynamic random access memory (SDRAM), and may be direct-memory accessed (DMA) by the video controller. Thus, various types of test images may be formed.

Although a few exemplary embodiments of the present general inventive concept have been shown and described, it will be appreciated by those skilled in the art that changes may be made in these exemplary embodiments without departing from the principles of the general inventive concept, the scope of which is defined in the appended claims.

## Claims

1. An image forming apparatus comprising:
a transport part (110) which comprises a transport belt (110a) to transport a printing medium;
an image forming part (120) which transfers a toner to form a color image;
a controller (140) which controls the image forming part (120) to form a test image on the transport belt (110a); and
a sensor (150) provided on a path of the transport belt and arranged to sense light reflected from the test image and to deliver the sensed result to the controller (140);
**characterized in that**:
the image forming apparatus includes:
an Auto Colour Registration controller (122a) and an Light Scanning Unit controller (122b);
wherein the sensed result obtained from the sensor (150) by the controller (140) is transmitted to the Auto Colour Registration controller to perform a colour registration correction of the image forming part; and
wherein controller is adapted to control the image forming part to form the test image on the transport belt (110a) after forming an image on a first printing medium and before forming another image on a second printing medium.

2. The image forming apparatus according to claim 1, wherein the image forming part (120) comprises:
an engine which performs an exposure process for the toner to be developed and transferred;
a video controller (121) which generates video data based on printing data corresponding to the image being formed on one of the plurality of printing media or test data corresponding to the test image; and
an engine controller (122) which operates the engine on the basis of the video data generated by the video controller (121) .

3. The image forming apparatus according to claim 1 or claim 2, further comprising a data storage part (130) which stores the test data, wherein the video controller (121) reads out the test data stored in the data storage part (130) through direct memory access (DMA).

4. The image forming apparatus according to claim 3, wherein the data storage part (130) further stores the printing data.

5. A control method of an image forming apparatus which comprises: a transport part (110) having a transport belt (110a) to transport a printing medium; an image forming part (120) to transfer a toner to form a color image; a sensor (150) arranged to sense light reflected from a test image; an Auto Colour Registration controller (122a) to perform a colour registration correction of the image forming part based on the sensor result; and a Light Scanning Unit controller (122b); the control method comprising:
controlling the image forming part (120) to form an image on a plurality of printing media corresponding to a single printing process; and
controlling the image forming part (120) to form a test image for color registration of the image forming part (120) on the transport belt (110a) after forming an image on a first printing medium and before forming another image on a second printing medium among the plurality of the printing media.

6. The control method of the image forming apparatus according to claim 5, wherein the image forming part (120) comprises:
an engine which performs an exposure process for the toner to be developed and transferred;
a video controller (121) which generates video data; and
an engine controller (122) which operates the engine according to the video data generated by the video controller (121),
the controlling the image forming part (120) to form the image on the first printing medium, the transport belt (110a) and the second printing medium comprising controlling the video controller (121) to generate video data based on printing data or test data for color registration according to whether the image forming part (120) performs the printing process to form the image on the printing medium or the color registration.

7. The control method of the image forming apparatus according to claim 5 or claim 6, wherein the image forming apparatus further comprises a data storage part (130) which stores the test data,
the controlling the image forming part (120) to form the test image comprising controlling the video controller (121) to read out the test data stored in the data storage part (130) through direct memory access (DMA).

8. The control method of the image forming apparatus according to claim 7, wherein the data storage part (130) further stores the printing data,
the controlling the image forming part (120) to form the image on the first printing medium and the second printing medium comprising controlling the video controller (121) to read out the printing data stored in the data storage part (130) through direct memory access (DMA).

## Patentansprüche

1. Bilderzeugungsgerät, umfassend:
ein Transportteil (110), das ein Transportband (110a) umfasst, um ein Druckmedium zu transportieren;
ein Bilderzeugungsteil (120), das einen Toner überträgt, um ein Farbbild zu erzeugen;
einen Controller (140), der das Bilderzeugungsteil (120) steuert, um ein Testbild auf dem Transportband (110a) zu erzeugen; und
einen Sensor (150), der auf einem Weg des Transportbands bereitgestellt und so angeordnet ist, dass er von dem Testbild reflektiertes Licht abfühlt und das abgefühlte Ergebnis an den Controller (140) schickt;
**dadurch gekennzeichnet, dass**:
das Bilderzeugungsgerät Folgendes einschließt:
einen Automatische-Farbregistrierung-Controller (122a) und einen Lichtabtasteinheit-Controller (122b);
wobei das abgefühlte Ergebnis, das von dem Controller (140) durch den Sensor (150) erhalten wird, an den Automatische-Farbregistrierung-Controller übermittelt wird, um eine Farbregistrierungskorrektur des Bilderzeugungsteils auszuführen; und
wobei der Controller dazu geeignet ist, das Bilderzeugungsteil zu steuern, um das Testbild nach dem Erzeugen eines Bildes auf einem ersten Druckmedium und vor dem Erzeugen eines weiteren Bildes auf einem zweiten Druckmedium auf dem Transportband (110a) zu erzeugen.

2. Bilderzeugungsgerät gemäß Anspruch 1, wobei das Bilderzeugungsteil (120) Folgendes umfasst:
eine Maschine, die einen Belichtungsprozess für die Entwicklung und Übertragung des Toners ausführt;
einen Videocontroller (121), der basierend auf Druckdaten, die dem Bild entsprechen, das auf einem von den mehreren Druckmedien erzeugt wird, oder Testdaten, die dem Testbild entsprechen, Videodaten erzeugt; und
einen Maschinen-Controller (122), der die Maschine auf Basis der von dem Videocontroller (121) erzeugten Videodaten bedient.

3. Bilderzeugungsgerät gemäß Anspruch 1 oder Anspruch 2, ferner umfassend ein Datenspeicherteil (130), das die Testdaten speichert, wobei der Videocontroller (121) die in dem Datenspeicherteil (130) gespeicherten Testdaten durch Direktspeicherzugriff (Direct Memory Access, DMA) ausliest.

4. Bilderzeugungsgerät gemäß Anspruch 3, wobei das Datenspeicherteil (130) ferner die Druckdaten speichert.

5. Steuerverfahren eines Bilderzeugungsgeräts, welches Folgendes umfasst: ein Transportteil (110) mit einem Transportband (110a), um ein Druckmedium zu transportieren; ein Bilderzeugungsteil (120) zum Übertragen eines Toners, um ein Farbbild zu erzeugen; einen Sensor (150), der so angeordnet ist, dass er von einem Testbild reflektiertes Licht abfühlt; einen Automatische-Farbregistrierung-Controller (122a), um eine Farbregistrierungskorrektur des Bilderzeugungsteils basierend auf dem Sensorergebnis auszuführen; und einen Lichtabtasteinheit-Controller (122b); wobei das Steuerverfahren folgende Schritte umfasst:
Steuern des Bilderzeugungsteils (120), um ein Bild auf mehreren Druckmedien entsprechend einem einzelnen Druckprozess zu bilden; und
Steuern des Bilderzeugungsteils (120), um nach dem Erzeugen eines Bildes auf einem ersten Druckmedium und vor dem Erzeugen eines weiteren Bildes auf einem zweiten Druckmedium von den mehreren Druckmedien ein Testbild zur Farbregistrierung des Bilderzeugungsteils (120) auf dem Transportband (110a) zu erzeugen.

6. Steuerverfahren des Bilderzeugungsgeräts gemäß Anspruch 5, wobei das Bilderzeugungsteil (120) Folgendes umfasst:
eine Maschine, die einen Belichtungsprozess für die Entwicklung und Übertragung des Toners ausführt;
einen Videocontroller (121), der Videodaten erzeugt; und
einen Maschinen-Controller (122), der die Maschine gemäß den von dem Videocontroller (121) erzeugten Videodaten bedient,
wobei das Steuern des Bilderzeugungsteils (120), um das Bild auf dem ersten Druckmedium, dem Transportband (110a) und dem zweiten Druckmedium zu erzeugen, das Steuern des Videocontrollers (121) umfasst, um basierend auf Druckdaten oder Testdaten zur Farbregistrierung Videodaten davon abhängig zu erzeugen, ob das Bilderzeugungsteil (120) den Druckprozess, um das Bild auf dem Druckmedium zu erzeugen, oder die Farbregistrierung ausführt.

7. Steuerverfahren des Bilderzeugungsgeräts gemäß Anspruch 5 oder Anspruch 6, wobei das Bilderzeugungsgerät ferner ein Datenspeicherteil (130) umfasst, das die Testdaten speichert,
wobei das Steuern des Bilderzeugungsteils (120), um das Testbild zu erzeugen, das Steuern des Videocontrollers (121) umfasst, um die in dem Datenspeicherteil (130) gespeicherten Testdaten durch Direktspeicherzugriff (DMA) auszulesen.

8. Steuerverfahren des Bilderzeugungsgeräts gemäß Anspruch 7, wobei das Datenspeicherteil (130) ferner die Druckdaten speichert,
wobei das Steuern des Bilderzeugungsteils (120), um das Bild auf dem ersten Druckmedium und dem zweiten Druckmedium zu speichern, das Steuern des Videocontrollers (121) umfasst, um die in dem Datenspeicherteil (130) gespeicherten Druckdaten durch Direktspeicherzugriff (DMA) auszulesen.

## Revendications

1. Appareil de formation d'image comprenant :
une partie de transport (110) qui comprend une courroie de transport (110a) pour transporter un support d'impression ;
une partie de formation d'image (120) qui transfert une encre en poudre pour former une image couleur ;
un dispositif de commande (140) qui commande la partie de formation d'image (120) pour former une image d'essai sur la courroie de transport (110a) ; et
un détecteur (150) prévu sur un trajet de la courroie de transport et agencé pour détecter la lumière réfléchie par l'image de test et pour livrer le résultat détecté au dispositif de commande (140) ;
**caractérisé en ce que** :
l'appareil de formation d'image comprend :
un dispositif de commande d'enregistrement automatique des couleurs (122a) et un dispositif de commande d'unité de balayage de lumière (122b) ;
dans lequel le résultat détecté obtenu à partir du détecteur (150) par le dispositif de commande (140) est transmis au dispositif de commande d'enregistrement automatique des couleurs pour effectuer une correction d'enregistrement des couleurs de la partie de formation d'image ; et
dans lequel le dispositif de commande est conçu pour commander la partie de formation d'image pour former l'image de test sur la courroie de transport (110a) après la formation d'une image sur un premier support d'impression et avant de former une autre image sur un second support d'impression.

2. Appareil de formation d'image selon la revendication 1, dans lequel la partie de formation d'image (120) comprend :
un moteur qui effectue un processus d'exposition pour que l'encre en poudre soit développée et transférée ;
un dispositif de commande vidéo (121) qui génère des données vidéo en fonction de données d'impression correspondant à l'image formée sur l'un de la pluralité de supports d'impression ou des données de test correspondant à l'image de test ; et
un dispositif de commande de moteur (122) qui fait fonctionner le moteur sur la base des données vidéo générées par le dispositif de commande vidéo (121).

3. Appareil de formation d'image selon la revendication 1 ou la revendication 2, comprenant en outre une partie de stockage de données (130) qui stocke les données de test, dans lequel le dispositif de commande vidéo (121) lit les données de test stockées dans la partie de stockage de données (130) à travers un accès direct à la mémoire (DMA).

4. Appareil de formation d'image selon la revendication 3, dans lequel la partie de stockage de données (130) stocke en outre les données d'impression.

5. Procédé de commande d'un appareil de formation d'image qui comprend : une partie de transport (110) ayant une courroie de transport (110a) pour transporter un support d'impression ; une partie de formation d'image (120) pour transférer une encre en poudre afin de former une image couleur ; un détecteur (150) agencé pour détecter la lumière réfléchie par une image de test ; un dispositif de commande d'enregistrement automatique des couleurs (122a) pour effectuer une correction d'enregistrement des couleurs de la partie de formation d'image en fonction du résultat de la détection ; et un dispositif de commande d'unité de balayage de lumière (122b) ; le procédé comprenant :
la commande de la partie de formation d'image (120) pour former une image sur une pluralité de supports d'impression correspondant à un processus d'impression unique ; et
la commande de la partie de formation d'image (120) pour former une image de test pour l'enregistrement des couleurs de la partie de formation d'image (120) sur la courroie de transport (110a) après la formation d'une image sur un premier support d'impression et avant la formation d'une autre image sur un second support d'impression parmi la pluralité des supports d'impression.

6. Procédé de commande de l'appareil de formation d'image selon la revendication 5, dans lequel la partie de formation d'image (120) comprend :
un moteur qui effectue un processus d'exposition pour que l'encre en poudre soit développée et transférée ;
un dispositif de commande vidéo (121) qui génère des données vidéo ; et
un dispositif de commande de moteur (122) qui fait fonctionner le moteur en fonction des données vidéo générées par le dispositif de commande vidéo (121),
la commande de la partie de formation d'image (120) pour former l'image sur le premier support d'impression, la courroie de transport (110a) et le second support d'impression comprenant la commande du dispositif de commande vidéo (121) pour générer des données vidéo en fonction de données d'impression ou de données de test pour l'enregistrement des couleurs selon que la partie de formation d'image (120) effectue le processus d'impression pour former l'image sur le support d'impression ou l'enregistrement des couleurs.

7. Procédé de commande de l'appareil de formation d'image selon la revendication 5 ou la revendication 6, dans lequel l'appareil de formation d'image comprend en outre une partie de stockage de données (130) qui stocke les données de test,
la commande de la partie de formation d'image (120) pour former l'image de test comprenant la commande du dispositif de commande vidéo (121) pour lire les données de test stockées dans la partie de stockage de données (130) à travers un accès direct à la mémoire (DMA).

8. Procédé de commande de l'appareil de formation d'image selon la revendication 7, dans lequel la partie de stockage de données (130) stocke en outre les données d'impression,
la commande de la partie de formation d'image (120) pour former l'image sur le premier support d'impression et le second support d'impression comprenant la commande du dispositif de commande vidéo (121) pour lire les données d'impression stockées dans la partie de stockage de données (130) à travers un accès direct à la mémoire (DMA).
